# EUROPÄISCHE PATENTANMELDUNG

(11) **EP 1 118 645 A2**
(43) Veröffentlichungstag der Anmeldung: **25.07.2001**
(21) Anmeldenummer: 00107962.3
(22) Anmeldetag: 17.04.2000
(51) Int. Cl.: C09D 11/02

(54) **Verfahren zur Herstellung von Heissschmelzdruckfarben**

(30) Priorität: 20.01.2000 DE 10002116
(71) Anmelder: Siegwerk Druckfarben GmbH & Co. KG, 53721 Siegburg (DE)
(72) Erfinder: Leineweber, Dr., 53721 Siegburg (DE); Griebel, Rudolf, Dr., 53721 Siegburg (DE)
(74) Vertreter: Sternagel, Fleischer, Godemeyer & Partner Patentanwälte

(57) **Zusammenfassung**

Gegenstand der Erfindung ist ein Verfahren zur Herstellung einer Heißschmelzdruckfarbe durch
a) Einbringen des Gemisches aus einem oder mehreren Pigmenten und einem oder mehreren Bindemitteln in einen Knettrog eines Kneters
b) Aufheizen des Knettroges auf die Erweichungstemperatur des Bindemittels von 60 bis 160 °C oder Einbringen des Gemisches in den auf diese Temperaturen vorgeheizten Knettrog
c) Kneten des Gemisches während des Aufheizens
d) Abschalten der Heizvorrichtung nach Erreichen einer zähflüssigen knetbaren Masse
e) Umwälzung der Masse mit hoher Scherung durch die Knetarme bis zur Konstanz der optischen Dichte einer Kontrolldruckprobe

## Beschreibung

Gegenstand der Erfindung ist ein Verfahren zur Herstellung von Heißschmelzdruckfarben.

Heißschmelzdruckfarben sind Stand der Technik und bekannt beispielsweise aus der DE 42 05 713 A 1, der DE 26 35 226 A 1 und der EP 0 700 977 A1 sowie einer am gleichen Anmeldetag eingereichten Patentanmeldung der Anmelderin dieser Erfindung.

Schmelzdruckfarben setzen sich üblicherweise aus bei Raumtemperatur festen Lösemitteln, Bindemitteln und optional Additiven und Farbmitteln zusammen.

Im Stand der Technik werden die Schmelzdruckverfahren üblicherweise durch Mischen der entsprechenden Komponenten hergestellt. So beschreibt die DE 26 35 226 A 1 die Herstellung der Schmelzdruckfarbe auf einem Drei- oder Zweiwalzenstuhl bei Temperaturen von 60 bis 70°C, wo die einzelnen Bestandteile der Farbe homogenisiert werden.

In der DE 42 05 713 A 1 und der EP 0 700 977 A 1 erfolgt die Herstellung der Schmelzdruckfarben durch Erhitzen des Gesamtgemenges aus Lösemittel, Bindemittel und weiteren optionalen Komponenten in entsprechenden Misch- und Dispergierextrudern.

Bei der Herstellung der Schmelzdruckfarben nach den bekannten Verfahren des Standes der Technik hat sich herausgestellt, daß insbesondere beim Zumischen von Farbpigmenten zu den Schmelzdruckfarben keine optimale Dispergierung mit den bekannten Verfahren des Standes der Technik erzielt wird. Dies führt beim Verdrucken derartiger Druckfarben zu erheblichen Problemen. Als Folge einer ungenügenden Pigmentdispergierung in der Druckfarbe kann sich eine "Pigmentflockung" ergeben, die z.B. im Falle des Tiefdruckes zu einer Ansammlung der geflockten Pigmentagglomerate unter der Tiefdruck-Rakel und somit zu einer das erzeugte Druckbild erheblich störenden Streifenbildung im Druck führen kann.

Ferner ergeben sich als Folge einer unzulänglichen Pigmentdispergierung auch Nachteile hinsichtlich der Wirtschaftlichkeit einer Druckfarbe, da die ungenügende Dispergierung zu Defiziten bezüglich der "Farbkraft" pro eingesetztem Gewichtsanteil von Pigmenten in der Druckfarbe führt und somit zu einer unwirtschaftlichen Reduzierung der "optischen Ausbeute" im Druck.

Die technische Aufgabe der Erfindung war es daher, ein verbessertes Verfahren zur Herstellung von Heißschmelzdruckfarben zur Verfügung zu stellen, das insbesondere zu einer besseren Dispergierung der Farbpigmente in der Farbe führt.

Diese technische Aufgabe wird dadurch gelöst, daß das Gemisch aus einem oder mehreren Pigmenten und einem oder mehreren Bindemitteln in einen Knettrog eines Kneters gegeben wird. Dieser Knettrog wird dann auf die Erweichungstemperatur des Bindemittels erhitzt und das Gemisch bereits während des Aufheizvorganges im Kneter umgewälzt. Sobald die Glasübergangstemperatur des thermoplastischen Bindemittels überschritten ist und dann darüber hinausgehend mit weiter steigender Temperatur eine Erweichung der Masse bis zu einem zähflüssigen Zustand eingetreten ist, beginnt die eigentliche Knetung der zähflüssigen, knetbaren Masse. Nun erfolgt das Abschalten der Heizung, wonach die Masse mit hoher Scherung durch die Knetarme bis zur Konstanz der optischen Dichte einer Kontrolldruckprobe umgewälzt wird. Der Grad der Dispergierung wird durch Messung der optischen Dichte einer Druckprobe ermittelt, die mit einer aktuell aus dem momentanen Zustand der jeweiligen Knetmasse hergestellten Druckfarbenprobe gefertigt wird. Wenn die optische Dichte dieser Druckprobe konstant, d.h. invariant gegen eine weitere Erhöhung der Knetzeit ist, ist eine ausreichende Dispergierung erreicht.

Das Gemisch kann auch 0 - 10 Gew.-% bei Raumtemperatur festes Lösemittel und 0 - 3 Gew.-% Additive enthalten.

Man erhält so ein Vorprodukt, daß anschließend zur Herstellung der Heißschmelz-Druckfarbe mit dem Lösemittel, gegebenenfalls weiterem Bindemittel und gegebenenfalls weiteren Additiven oberhalb der Schmelztemperatur des Lösemittels verschnitten wird.

Im Vergleich zur Herstellung normaler Druckfarben bestehen bei der Herstellung der Heißschmelzdruckfarben andere Anforderungen.

Bei der Herstellung von Pigmentdispergierungen für herkömmliche, bei Raumtemperatur flüssige, pigmentierte Druckfarben werden nach dem Stand der Technik Perlmühlen eingesetzt. In Fällen besonders leicht zu dispergierender Pigmente, beziehungsweise auch im Falle der Verwendung von Farbstoffen als Farbmittel werden auch Dissolver eingesetzt. Bei der Herstellung flüssiger Druckfarben werden Pigmente mit Bindemitteln und Lösemittel und optional auch Dispergieradditiven in jeweils gewünschter Menge in einer bei Raumtemperatur flüssigen Mischung mit Viskositäten der Größenordnung 0,1 bis 100 Pas in solchen Dispergieraggregaten vorgelegt und dann durch hohe Scherungen im lokal hochturbulenten Strömungsfeld der aus den genannten Komponenten bestehenden Flüssigkeit dispergiert. Im Falle der Verwendung von Perlmühlen leistet auch die direkte Impulsübertragung von den in der Perlmühle umgewälzten Kugelperlen auf das zu zerkleinernde Pigmentkorn einen Beitrag zur Dispergierung. In der flüssigen Mischung werden das optional vorhandene Dispergieradditiv und das Bindemittel im Lauf der Dispergierung an die frisch geschaffenen Oberflächen des Pigmentes herantransportiert und dort durch geeignete Wechselwirkung dauerhaft adsorbiert. Die durch verschiedene physikalische Wechselwirkung angetriebene Reagglomeration bzw. Flockung der frisch erzeugten hochaktiven Pigmentoberflächen zu einer Minimumsoberfläche wird dadurch verhindert. Die Temperatur des Dispergieransatzes wird durch Kühlung geregelt. Ohne diese Maßnahme ergäbe sich in Folge der viskosen Dissipation der in den Ansatz eingebrachten mechanischen Arbeit im Verlauf der Dispergierung ein erheblicher Temperaturanstieg und somit eine Viskositätserniedrigung die wiederum zu einer Minderung der zum Dispergiererfolg beitragenden Schergefälle im lokalen Strömungsfeld führen würde. Auch die Lösemittelverdampfung würde durch einen Temperaturanstieg gefördert und damit der Kavitationsverschleiß des Dispergieraggregates.

Aus dem vorstehenden wird deutlich, daß die Dispergierung von Pigmenten in Druckfarbenbindemitteln im flüssigen Systemzustand erfolgen muß und speziell in Dissolvern und auch Perlmühlen in einem Fließzustand durchgeführt wird, der lokale Turbulenzen zulässt und somit nach Maßgabe der lokalen Reynoldszahlen entsprechende Viskositäten aufweist.

Im Falle der Dispergierung der erfindungsgemäßen Schmelzdruckfarben müssen demnach diese Dispergiermaschinen bis mindestens auf die Temperatur geheizt werden, die zur Erreichung der notwendigen Viskosität im Heißschmelzansatz unter Einbeziehung des bei Raumtemperatur kristallinen Lösemittels notwendig sind. Hierbei haben sich jedoch die im Stand der Technik häufig verwendeten Perlmühlen als wenig geeignet gezeigt. Bei diesen Perlmühlen ist der Wärmedurchgang nämlich durch die Perlschüttung sehr erschwert. Auch die thermische Masse der Perlschüttung ist hoch, so daß insgesamt die Vorheizzeit der Perlmühle bis zu deren Befüllung mit dem notwendigerweise extern vorverflüssigten Dispergieransatz sehr lange ist. Wird diese Vorheizzeit zu kurz gewählt, so erstarrt der vorverflüssigte Ansatz beim Befüllen an den Perlkugeln und die Perlmühle ist blockiert. Dagegen ist im Falle der Verwendung von üblichen Dissolvern die Beheizung technisch einfach. Allerdings sind die Einsatzmöglichkeiten von Dissolvern auf besonders leicht dispergierbare Pigmente oder vorzugsweise Farbstoffe beschränkt.

Es wurde überraschenderweise gefunden, daß die Heißschmelzdruckfarben, die bei Raumtemperatur feste rieselförmige Gemische darstellen, durch Knetung bei extremen Schergefällen hergestellt werden können. Zu Beginn des Dispergierprozesses werden das Pigment oder die Pigmente zusammen mit dem oder den Bindemitteln und den optional vorhandenen Dispergieradditiven und optional mit einer kleinen Menge von vorzugsweise 0,1 - 5 Gew-% des bei Raumtemperatur kristallinen Lösemittels nach Maßgabe der zu fertigenden Knetrezeptur als schüttfähiges Gemenge oder auch schrittweise in Einzeldosierung in den beheizbaren Knettrog eines Kneters eingebracht.

Der Knettrog ist vorgeheizt oder er wird wahlweise nach dieser Beschickung auf die Erweichungstemperatur des eingesetzten Bindemittels oder Bindemittelgemisches oder Bindemittel-Lösemittel-Gemisches geheizt. Die Arbeitstemperaturen des Knetprozesses liegen über den Glasübergangstemperaturen der thermoplastischen Bindemittel und orientieren sich an deren Erweichungstemperaturen , die in den Produktspezifikationen der Hersteller von Thermoplasten angegeben sind. Der Kneter wird somit auf Temperaturen von 60 bis 160 °C, typischerweise auf Temperaturen von 60 bis 120 °C und vorzugsweise auf Temperaturen von 70 bis 110 °C je nach Art des thermoplastischen Bindemittels oder Bindemittelgemisches aufgeheizt. Die optionale Menge des bei Raumtemperatur festen kristallinen Lösemittels in der Mischung wird so gewählt, daß eine knetfähige zäh-fluide Masse bei den mit Rücksicht auf die Temperaturstabilität der Pigmente und der Bindemittel zu wählenden Temperaturen entsteht. Während der Trog aufgeheizt wird, zum Beispiel durch in die Trogwände eingelassene elektrische Heizkartuschen oder vorzugsweise durch ein Wärmeträgerfluid in einer doppelwandigen Trogkonstruktion, wird das im Trog befindliche, rieselfähige Schüttgemenge durch die Knetarme des Kneters umgewälzt. Als Wärmeträger können herkömmliche mineralölraffinierte Wärmeträgeröle der Firmen BP oder Shell mit den Markennamen Transcal® beziehungsweise Termia® oder auch synthetische Biphenylwärmeträgerfluide zum Beispiel die Handelsmarken Diphyl® , Marlotherm® der Firmen Bayer beziehungsweise Degussa-Hüls AG verwendet werden.

Durch Wärmeeintrag in das Gemenge über die Glasübergangstemperatur der thermoplastischen Bindemittel hinaus und optional bis zur Schmelztemperatur des optional vorhandenen kristallinen Lösemittels, die üblicherweise zwischen 65 und 109°C liegt, ergibt sich eine Erweichung des Gemenges bis hin zu einer zähflüssigen knetbaren Masse. Danach wird die Heizung des Troges abgeschaltet und die Knetmasse weiterhin durch die Bewegung der Knetarme mit hoher Scherung umgewälzt. Es tritt nun eine selbstregulierende Temperatursteuerung in der Knetmasse ein, die überraschenderweise nur in einem Kneter realisierbar ist. So wird die Zähigkeit der Masse völlig selbsttätig im Optimum der Dispergierviskosität gehalten. Dieser Regelmechanismus scheint in der Weise zu funktionieren, daß die viskose Dissipation der durch die Knetarme in die Knetmasse eingetragenen mechanischen Leistung gerade eben diejenige Wärmeleistung bereitstellt, die die Knetmasse auf optimaler Viskosität hält. Wird nämlich die Viskosität durch steigende mechanische Erwärmung der Knetmasse zu niedrig, geht die Konversion mechanischer Arbeit in Wärme zurück und die Viskosität der Masse nimmt durch Abkühlung der Masse wieder zu. Demzufolge steigt die Konversion von mechanischer Arbeit in Wärme wieder an, so daß die Viskosität erneut abnimmt. Im Stationärzustand dieser selbsttätigen Regelschleife befindet sich die Viskosität der Knetmasse in einem Optimum, in dem die mechanische Leistung bestens in dispergierende Schubspannung im Knetfluid umgesetzt wird. Es ist unter diesen Umständen ohne weiteres möglich, den Kneter ohne Regeleingriffe von außen, das heißt auch ohne jeglichen Aufwand hinsichtlich jedweder Regeleinrichtungen beliebig lange, mindestens also bis zur Vervollständigung der Dispergierung, laufen zu lassen.

Die Vervollständigung der Dispergierung wird bei der Entwicklung einer Rezeptur zum Beispiel nach 1½ bis 1 Stunde Knetzeit durch die Messung der Zunahme der optischen Dichte entsprechender Druckproben kontrolliert. Eine Druckprobe wird gefertigt mit einer aus dem Kneter entnommenen Teilmasse, die mit weiteren thermoplastischen Bindemitteln und kristallinem Lösemittel und optionalen Additiven durch Verrühren in der Hitze, also mindestens bei Temperaturen oberhalb der Schmelztemperatur des bei Raumtemperatur festen Lösemittels verschnitten wird. Der Druck dieser so zubereiteten Kontrollprobe findet dann auf einer Labordruckmaschine bei Temperaturen von 70 bis 120 °C statt, die eine druckmaschinen- und druckgeschwindigkeitskonforme Optimalviskosität der so gefertigten Druckfarbe ergeben, die im Bereich von 6 bis 20 mPas liegt.

Bleibt die optische Dichte einer nach verlängerter Knetzeit gefertigten Druckprobe relativ zu derjenigen einer aus dem vorausgehenden Knetzeitintervall entstammenden Druckprobe konstant, so ist die Dispergierung beendet.

Die optische Dichte der Druckprobe wird mit den in der grafischen Industrie und der Druckfarbenindustrie üblichen Methoden und Geräten der Auflicht-Densitometrie ermittelt.

Mit dem erfindungsgemäßen Verfahren lassen sich Heißschmelzdruckfarben mit hoher Dispergiergüte herstellen. Die nachfolgenden Beispiele sollen die Erfindung näher erläutern.

### BEISPIELE

### Beispiel 1

### Herstellung des Vorproduktes aus Farbpigment und Bindemittel .

In einem Knettrog werden 20 Gew.-% Farbpigment Miloriblau 690 BB (PB 27 : 77510) (Fa. Daicolor, Italien) und 80 Gew.-% Bindemittel Laropal K 80 (Fa. BASF AG) vorgelegt. Die Substanzen werden gemischt und der Knettrog auf 80 °C aufgeheizt. Es wird ca. 1,25 h geknetet bis eine aus der Masse hergestellte Druckprobe eine konstante optische Dichte zeigt. Man erhält eine hochviskose Masse, in der das Farbpigment hervorragend dispergiert ist. Anschließend läßt man abkühlen. Die erstarrte Masse kann gebrochen werden oder zu Pulver oder Granulat verarbeitet werden.

### Beispiel 2

### Herstellung der Druckfarbe

20 Gew.-% des Vorproduktes aus Beispiel 1 werden mit 70 Gew.-% Lösemittel N-Dodecyl-acetoacetamid und 10 Gew.-% Bindemittel Laropal K 80 in einen Rührer gegeben und gemischt. Man heizt auf 120 °C auf, wobei das Lösemittel schmilzt und sich das Vorprodukt allmählich in dem flüssigen Lösemittel löst. Man erhält schließlich eine homogene Lösung, die man abkühlen läßt. Die erstarrte Druckfarbe kann weiter zu Pulver, Granulat oder Tafeln verarbeitet werden.

## Patentansprüche

1. Verfahren zur Herstellung einer Heißschmelzdruckfarbe, **gekennzeichnet durch** die folgenden Schritte:
a) Einbringen des Gemisches aus einem oder mehreren Pigmenten und einem oder mehreren Bindemitteln in einen Knettrog eines Kneters
b) Aufheizen des Knettroges auf die Erweichungstemperatur des Bindemittels von 60 bis 160 °C oder Einbringen des Gemisches in den auf diese Temperaturen vorgeheizten Knettrog
c) Kneten des Gemisches während des Aufheizens
d) Abschalten der Heizvorrichtung nach Erreichen einer zähflüssigen knetbaren Masse
e) Umwälzung der Masse mit hoher Scherung durch die Knetarme bis zur Konstanz der optischen Dichte einer Kontrolldruckprobe

2. Verfahren nach Anspruch 1, **dadurch gekennzeichnet**, daß in dem Gemisch 0 bis 10 Gew.% bei Raumtemperatur feste Lösemittel und 0 bis 3 Gew.% Dispergieradditive enthalten sind.

3. Verfahren nach Anspruch 1, **dadurch gekennzeichnet**, daß die gemäß Schritten a) bis e) hergestellte Masse zur Herstellung einer Druckfarbe bei Temperaturen oberhalb des Schmelzpunktes des bei Raumtemperatur festen Lösemittels mit Lösemittel und gegebenenfalls mit weiterem Bindemittel und/oder Dispergieradditiven verschnitten wird.

4. Verfahren nach Anspruch 1, **dadurch gekennzeichnet**, daß das Aufheizen des Knettroges bzw. das Vorheizen des Knettroges auf 60 bis 120 °C erfolgt.
